# EUROPÄISCHE PATENTSCHRIFT

(11) **EP 0 546 366 B1**
(45) Veröffentlichungstag und Bekanntmachung des Hinweises auf die Patenterteilung: **11.06.1997**
(21) Anmeldenummer: 92119882.6
(22) Anmeldetag: 23.11.1992
(51) Int. Cl.: C09B 29/085, C09B 43/42, C09B 67/22

(54) **Monoazofarbstoffe und diese enthaltende Mischungen**
Monoazo dyes and mixtures containing them
Colorants monoazoiques et mélanges les contenant

(30) Priorität: 05.12.1991 DE 4140036
(43) Veröffentlichungstag der Anmeldung: 16.06.1993
(73) Patentinhaber: DyStar Japan Ltd., Osaka (JP)
(72) Erfinder: Bühler, Ulrich, Dr., W-8755 Alzenau (DE)
(74) Vertreter: Muley, Ralf, Dr.

(56) Entgegenhaltungen:
- EP-A- 0 043 795
- EP-A- 0 391 121

## Beschreibung

Die vorliegende Erfindung betrifft Monoazofarbstoffe, Mischungen die Monoazofarbstoffe enthalten, Verfahren zu ihrer Herstellung sowie ihre Verwendung zum Färben von hydrophoben synthetischen Materialien.

Dokument EP-A-391121 beschreibt Monoazofarbstoffe, welche zum anmeldungsgemäßen Farbstoff der Formel (I) gemäß Anspruch 1 strukturisomer sind (siehe Tabelle 3, Seite 14, Beispiele 4, 9, 11 und 12 von oben) und für das Färben und Bedrucken von Polyester enthaltenden Materialien verwendet werden können (siehe Seite 6, Absatz 1).

In der EP-A 43 795 sind bereits Farbstoffe beschrieben, die den erfindungsgemäßen Farbstoffen ähnlich sind. Allerdings sind diese mit anwendungstechnischen Nachteilen, insbesondere im Hinblick auf Aufbau- und Ausziehverhalten, verbunden. Daraus resultiert, daß beispielsweise keine großen Farbtiefen erreicht werden können und das Abwasser relativ stark belastet wird. Darüberhinaus führt eine relativ große Temperaturempfindlichkeit bei Schwankungen der Färbetemperatur leicht zu Farbtiefenschwankungen.

Aufgabe vorliegender Erfindung ist es, Farbstoffe mit verbesserten Eigenschaften im Hinblick auf die Farbstoffe der EP-A 43 795 bereitzustellen.

Die vorliegende Erfindung betrifft Monoazofarbstoffe der allgemeinen Formel I 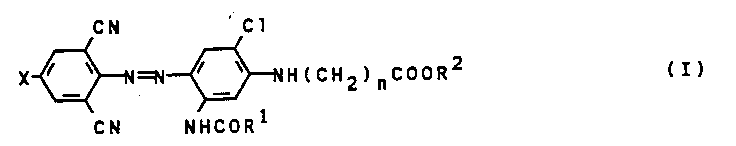 in der
- X: Methyl, Chlor oder Brom
- R¹: Ethyl, n-Propyl, i-Propyl, n-Butyl oder i-Butyl
- R²: Methyl, Ethyl, n-Propyl, i-Propyl, n-Butyl oder i-Butyl und
- n: 2 oder 3
bedeuten.

In der allgemeinen Formel I bedeutet X bevorzugt Chlor, R¹ bevorzugt n-Propyl und R² bevorzugt Methyl, n-Propyl oder i-Propyl. Besonders bevorzugt bedeutet R² Ethyl. n steht bevorzugt für 2.

Bevorzugte Farbstoffe der allgemeinen Formel I sind somit solche der allgemeinen Formel Ia 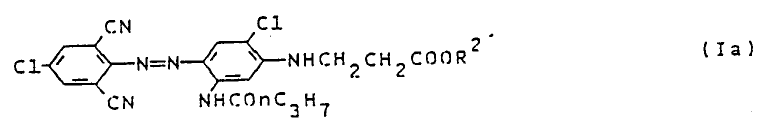 worin R^{2'} Methyl, Ethyl, n-Propyl oder i-Propyl bedeutet.

In einer besonderen Ausführungsform der vorliegenden Erfindung sind die Farbstoffe der allgemeinen Formel I mit C.I. Solvent Orange 63 oder diesem ähnlichen Farbstoffen nuanciert.

Eine weitere besondere Ausführungsform der vorliegenden Erfindung betrifft Mischungen von einem oder mehreren der Farbstoffe der allgemeinen Formel I mit einem oder mehreren Farbstoffen, wie sie üblicherweise zum Färben von Polyesterfasern oder Polyestertextilmaterialien für Automobilbezugsstoffe verwendet werden. Die genannten Farbstoffe zum Färben von Automobilbezugsstoffen sind insbesondere Azo-, Disazo-, Anthrachinon-, Nitro-, Naphthalimid- und Terephthalimid-Farbstoffe. Besonders bevorzugte Farbstoffe dieser Art sind die Colour-Index-Farbstoffe Yellow 23, Yellow 42, Yellow 51, Yellow 59, Yellow 71, Yellow 86, Yellow 108, Yellow 122, Yellow 163, Yellow 182, Orange 29, Orange 30, Orange 32, Orange 41, Orange 45, Orange 61, Orange 73, Red 60, Red 86, Red 91, Red 92, Red 127, Red 134, Red 138, Red 159, Red 167, Red 191, Red 202, Red 258, Red 279, Red 284, Red 302, Red 323, Blue 27, Blue 54, Blue 56, Blue 60, Blue 77, Blue 79:1, Blue 87, Blue 266, Blue 333, Violet 27, Violet 28, Violet 57 und Violet 95.

Die Gewichtsverhältnisse der Farbstoffe der allgemeinen Formel I und der genannten Farbstoffe sind völlig unkritisch und richten sich nach der gewünschten Farbnuance.

Die Herstellung der erfindungsgemäßen Farbstoffe der allgemeinen Formel I erfolgt vorzugsweise dadurch, daß man eine Verbindung der allgemeinen Formel II 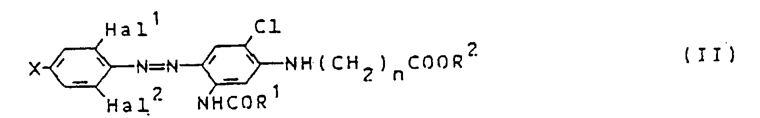 worin
Hal¹ und Hal² unabhängig voneinander Chlor oder vorzugsweise Brom bedeutet und R¹, R², X und n wie oben angegeben definiert sind, einer nucleophilen Austauschreaktion unterwirft, wobei als nucleophiles Agenz das Cyanidion CN^{⊖} eingesetzt wird. Diese Reaktion, bei der für Hal stehendes Chlor oder Brom gegen CN ausgetauscht wird, wird bevorzugt nach den Angaben in der DE-OS 1809920, der DE-OS 1809921, der GB-PS 1184825, der DE-AS 1544563, der DE-OS 2310745, der DE-AS 2456495, der DE-AS 2610675, der DE-OS 2724116, der DE-OS 2724117, der DE-OS 2834137, der DE-OS 2341109, der US-PS 3821295, der DE-OS 2715034 oder der DE-OS 2134896 ausgeführt.

Die Herstellung der Verbindungen der allgemeinen Formel II erfolgt nach dem Fachmann bekannten Verfahren, vorzugsweise dadurch, daß man ein Amin der allgemeinen Formel III 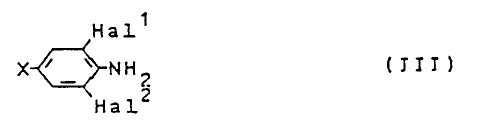 worin X und Hal¹ bzw. Hal² wie oben angegeben definiert sind, diazotiert und auf ein Amin der allgemeinen Formel IV 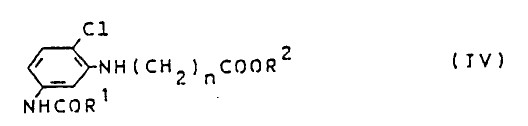 worin R¹, R² und n wie oben angegeben definiert sind, kuppelt.

Die Verbindungen der allgemeinen Formeln III und IV sind bekannt und können nach dem Fachmann bekannten Methoden hergestellt werden.

Die erfindungsgemäßen Farbstoffmischungen können nach verschiedenen Verfahren hergestellt werden, so z.B.:
1. Durch Mischen von mindestens zwei separat hergestellten und formierten Einzelfarbstoffen.
2. Durch Mischen der separat hergestellten, nicht formierten Einzelfarbstoffe und gemeinsame Formierung.

Die erfindungsgemäßen Farbstoffe und Farbstoffmischungen sind einzeln oder im Gemisch mit anderen Dispersionsfarbstoffen vorzüglich zum Färben und Bedrucken von hydrophoben synthetischen Materialien geeignet. Als hydrophobe synthetische Materialien kommen z.B. in Betracht: Cellulose-2¹/2-acetat, Cellulosetriacetat, Polyamide und hochmolekulare Polyester. Vorzugsweise werden die erfindungsgemäßen Farbstoffe zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Zellulosetriacetat eingesetzt.

Die hydrophoben synthetischen Materialien können in Form von flächen- oder fadenförmigen Gebilden vorliegen und z.B. zu Garnen oder gewebten, gewirkten oder gestrickten Textilstoffen verarbeitet sein. Das Färben des genannten Fasergutes mit den erfindungsgemäßen Farbstoffen oder Farbstoffmischungen kann in an sich bekannter Weise erfolgen, vorzugsweise aus wäßriger Suspension, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 80 bis 230°C fixiert wird. Das Bedrucken der genannten Materialien kann in an sich bekannter Weise so durchgeführt werden, daß die erfindungsgemäßen Farbstoffe oder Farbstoffmischungen in eine Druckpaste einverleibt werden und die damit bedruckte Ware zur Fixierung des Farbstoffs, gegebenenfalls in Gegenwart eines Carriers, bei Temperaturen zwischen 80 bis 230°C mit HT-Dampf, Druckdampf oder Trockenhitze behandelt wird. Man erhält auf diese Weise sehr farbstarke brillante blaustichig rote Färbungen mit sehr guten Gebrauchsechtheiten, wie Thermofixier-, Wasch-, Wasser- und Thermomigrierechtheit sowie insbesondere einer sehr guten Lichtechtheit.

Die erfindungsgemäßen Farbstoffe und Farbstoffmischungen eignen sich ganz besonders zum Färben und Bedrucken von Polyesterfasern und Polyestertextilmaterialien für Automobilbezugsstoffe. Bevorzugt werden zu diesem Zweck die oben beschriebenen Farbstoffe der allgemeinen Formel I mit einem oder mehreren Farbstoffen, wie sie üblicherweise zum Färben von Automobilbezugsstoffen verwendet werden, eingesetzt. Es ist darüberhinaus bevorzugt das Färben von Automobilbezugsstoffen in Gegenwart von UV-Absorbern auszuführen. Geeignete UV-Absorber sind beispielsweise solche auf Basis Benzophenon oder Benztriazol.

Einzelheiten zum Färben von Automobilbezugsstoffen sind beispielsweise in Textilveredelung 20 (1985), Nr. 4, Seite 126, 20 (1985), Nr. 11, Seite 356 und 23 (1988), Nr. 5, Seite 170 beschrieben.

Die erfindungsgemäßen Farbstoffe oder Farbstoffmischungen eignen sich auch zum Färben der vorstehend aufgeführten hydrophoben Materialien aus organischen Lösungsmitteln nach den hierbei bekannten Methoden. In den bei obigen Applikationen eingesetzten Färbeflotten und Druckpasten sollen die erfindungsgemäßen Farbstoffe bzw. Farbstoffmischungen in möglichst feiner Verteilung vorliegen.

Die Feinverteilung der Farbstoffe erfolgt in an sich bekannter Weise dadurch, daß man den in der Fabrikation anfallenden Farbstoff zusammen mit Dispergiermiteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gewichtsprozent und einen Dispergiermittelgehalt bis zu etwa 25 % eingestellt. Aus ökonomischen Gründen werden Farbstoffgehalte von 15 Gewichtsprozent meist nicht unterschritten.

Die Dispersionen können auch noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat und Natriumpentachlorphenolat und insbesondere sogenannten "Säurespender" wie z.B. Butyrolacton, Monochloracetamid, Natriumchloracetat, Natriumdichloracetat, Na-Salz der 3-Chlorpropionsäure, Halbester der Schwefelsäure wie z.B. Laurylsulfat, Schwefelsäureester von oxethylierten und oxypropylierten Alkoholen wie z.B. Butylglykolsulfat.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs- und Entstaubungsmittel und die oben genannten "Säurespender".

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt. Durch Zugabe von organischen und anorganischen Säuren wie Essigsäure, Bernsteinsäure, Borsäure oder Phosphorsäure wird ein pH-Wert von 4 bis 5, vorzugsweise von 4,5, eingestellt. Es ist vorteilhaft, den eingestellten pH-Wert abzupuffern und eine ausreichende Menge eines Puffersystems zuzusetzen. Ein vorteilhaftes Puffersystem ist z.B. das System Essigsäure/Natriumacetat.

Soll der Farbstoff oder die Farbstoffmischung für den Textildruck herangezogen werden, so werden die erforderlichen Mengen der Farbstoffeinstellungen in an sich bekannter Weise zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxydationsmitteln, zu Druckpasten verknetet.

Die erfindungsgemäßen Farbstoffe und Farbstoffmischungen bieten im Vergleich zu den ähnlichen Farbstoffen der EP 43 795 überraschenderweise deutliche Vorteile, insbesondere bezüglich Aufbau- und Ausziehverhalten. Mit ihnen lassen sich größere Farbtiefen erzielen und sie sind ökonomischer, da sie vollständiger auf das Färbegut aufziehen und das Abwasser weniger stark belasten. Ihre Temperaturempfindlichkeit ist geringer, das heißt die Farbtiefenschwankungen bei Schwankungen der Färbetemperatur sind kleiner. Sie färben auch bei verkürzter Färbezeit und ziehen auf Substrate wie beispielsweise modifiziertes Polyester, Polyamid, Cellulosetriacetat und Cellulose-2 1/2-acetat auf. Ein weiterer Vorzug besteht darin daß sie aufgrund ihrer großen Farbtiefe und ihres besonders klaren Farbtons als Alternative zu C.I. Disperse Red 60 in Frage kommen und demgegenüber deutliche Kostenvorteile bieten. Aufgrund ihrer auch bei höherer Temperatur und Luftfeuchtigkeit hervorragenden Lichtechtheit sind sie weiterhin hervorragend geeignet zum Färben von Automobilbezugsstoffen, gegebenenfalls in Mischungen wie oben beschrieben.

Insgesamt ergibt sich somit für die erfindungsgemäßen Farbstoffe und Farbstoffmischungen ein nicht vorhersehbarer erheblicher anwendungstechnischer Vorteil im Vergleich zum Stand der Technik.

Die Erfindung wird durch die folgenden Beispiele näher erläutert. Prozentangaben sind Gewichtsprozente.

### Beispiel 1

In eine Suspension aus 100 ml Dimethylsulfoxid, 2,1 g Natriumcyanid und 7,1 g Kupfer-I-cyanid werden bei 70 bis 75°C 60,9 g des Farbstoffs der Formel 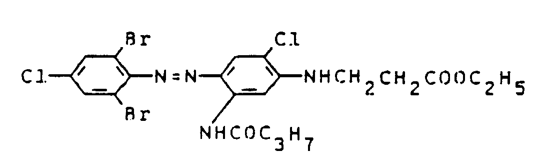 eingetragen und 30 min bei dieser Temperatur gerührt. Dann wird die Temperatur 30 min auf 110°C angehoben und der Ansatz anschließened langsam kaltgerührt, abgesaugt, mit 45 ml Dimethylsulfoxid, 7,5%iger wäßriger Ammoniaklösung und Wasser gewaschen und unter vermindertem Druck getrocknet. Man erhält so 41,8 g des Farbstoffs der Formel 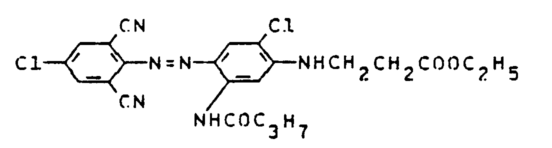 der bei 524 nm sein Absorptionsmaximum hat und sich in o-Dichlorbenzol mit roter Farbe löst.

0,6 g des so erhaltenen Farbstoffs werden in feindispergierter Form in 2000 g Wasser eingerührt. Die Dispersion wird mit Essigsäure und Natriumacetat auf einen pH-Wert 4,5 eingestellt und mit 2,0 g eines handelsüblichen Dispergiermittels auf Basis eines Naphthalinsulfonsäure-Formaldehyd-Kondensats versetzt.

In die so erhaltene Färbeflotte bringt man 100 g eines Polyestergewebes auf Basis von Polyethylenglykolterephthalats ein und färbt 45 min bei 130°C.

Nach anschließendem Spülen, reduktiver Nachbehandlung mit einer 0,2 %igen Natriumdithionitlösung während 15 min bei 70 bis 80 °C, Spülen und Trocknen erhält man eine farbstarke rote Färbung mit sehr guten coloristischen Eigenschaften, insbesondere sehr guter Licht- und Thermofixierechtheit.

### Beispiel 2

1,3 g einer handelsüblichen Pulverpräparation von C.I. Disperse Yellow 42, 1 g einer handelsüblichen Pulverpräparation von C.I. Disperse Blue 27 und 0,1 g des feindispergierten Farbstoffs der Formel 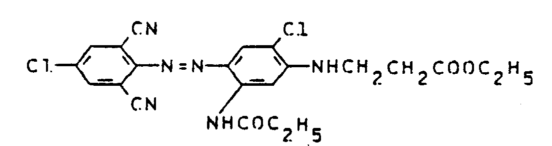 werden in 2000 g Wasser eingerührt. Die Dispersion wird mit 4 g Natriumacetat versetzt, mit Essigsäure auf einen pH-Wert von 5 gestellt und mit 4 g eines handelsüblichen Egalisierhilfsmittels auf Basis lineares anionisches Polykondensat sowie mit 3 g eines handelsüblichen UV-Absorbers auf Basis Benztriazol versetzt. In die so erhaltene Färbeflotte bringt man 100 eines Automobilbezugsstoffes auf Basis Polyethylenglykolterephthalat ein und färbt eine Stunde bei 130 °C. Nach anschließendem Spülen, reduktiver Nachbehandlung, Spülen und Trocknen erhält man eine braune Färbung mit hervorragender Lichtechtheit.

### Beispiel 3

15 g des Farbstoffs der Formel 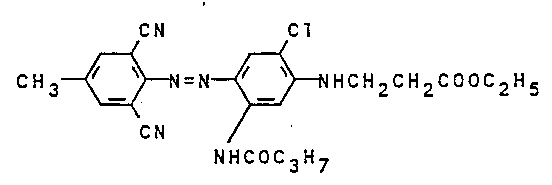 der sein Absorptionsmaximum bei 508 nm hat, werden in feiner Verteilung einer Druckpaste, die 45 g Johannisbrotkernmehl, 6 g 3-Nitrobenzolsulfonsaures Natrium und 3 g Zitronensäure auf 100 g enthält, einverleibt. Wird Polyester mit dieser Druckpaste bedruckt, das bedruckte Gewebe nach dem Trocknen 15 min bei 1,5 atü Dampfdruck gedämpft, geseift, gespült und getrocknet, so erhält man einen farbstarken gelbstichig roten Druck mit hervorragenden Echtheiten.

In der nachstehenden Tabelle sind weitere erfindungsgemäße Farbstoffe angegeben, die auf Polyester ebenfalls farbstarke rote Färbungen und Drucke mit ebenfalls sehr guten coloristischen Eigenschaften liefern.

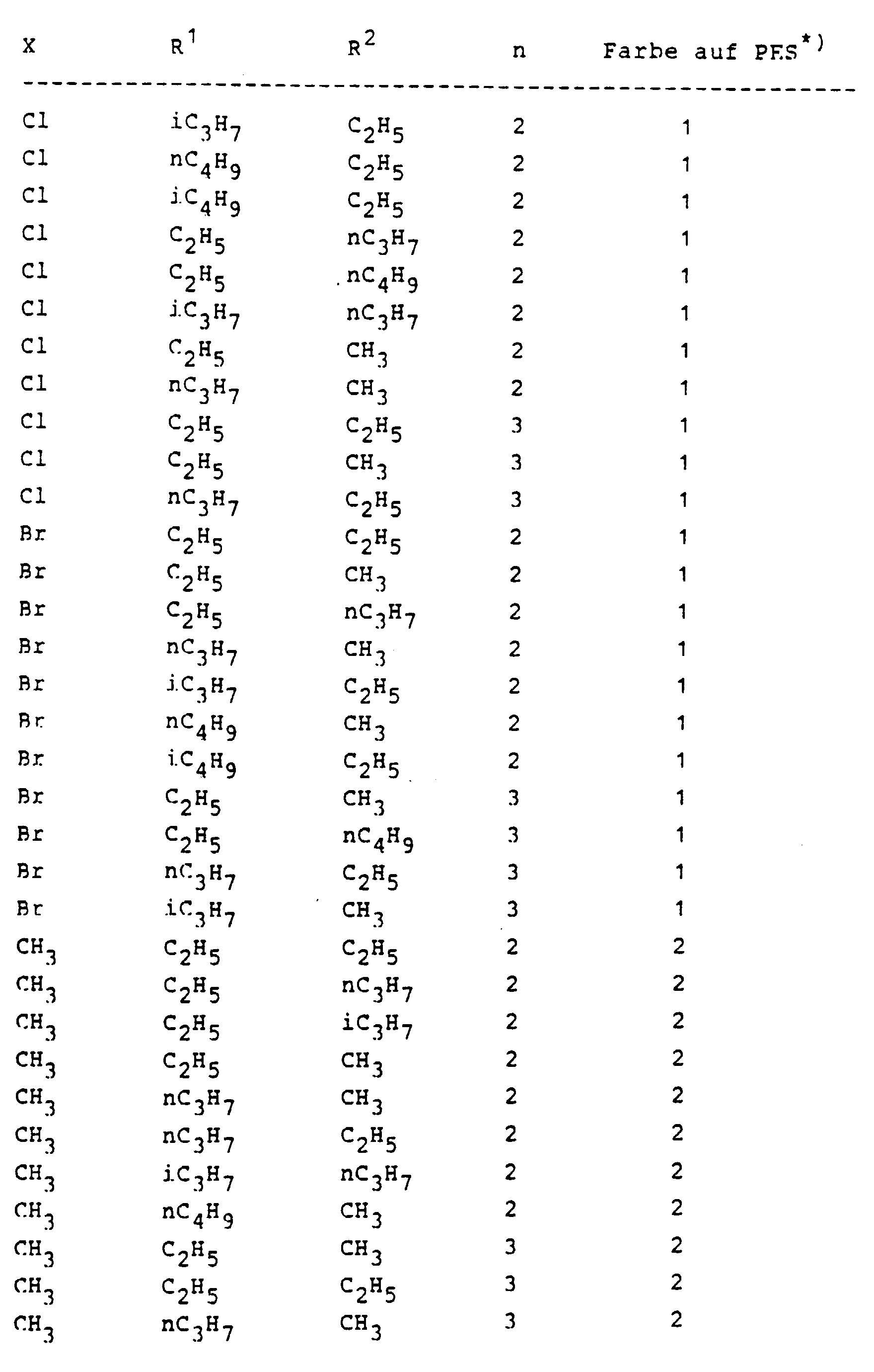

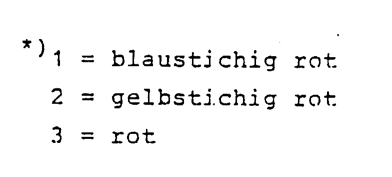

## Patentansprüche

1. Monoazofarbstoff der allgemeinen Formel I 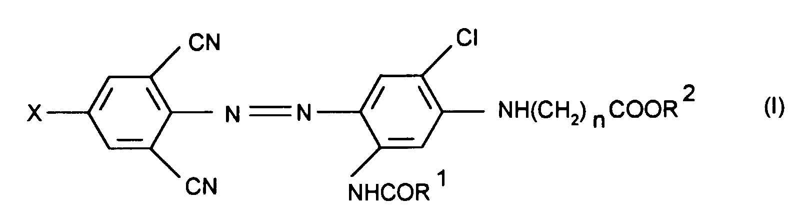 in der
X Methyl, Chlor oder Brom
R¹ Ethyl, n-Propyl, i-Propyl, n-Butyl oder i-Butyl
R² Methyl, Ethyl, n-Propyl, i-Propyl, n-Butyl oder i-Butyl und
n 2 oder 3
bedeuten.

2. Monoazofarbstoff gemäß Anspruch 1, dadurch gekennzeichnet, daß er die Formel la 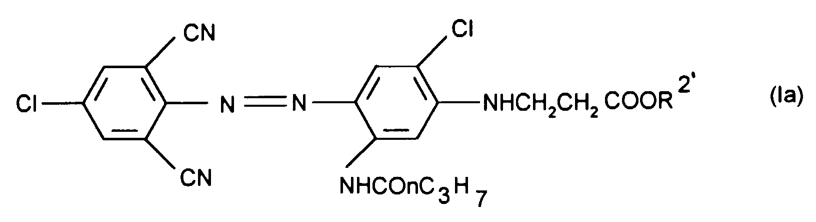 worin R^{2'} Methyl, Ethyl, n-Propyl oder i-Propyl bedeutet, aufweist.

3. Monoazofarbstoff gemäß Anspruch 1 und/oder 2, dadurch gekennzeichnet, daß er mit C.I. Solvent Orange 63 oder diesem ähnlichen Farbstoffen nuanciert ist.

4. Mischung von einem oder mehreren der Monoazofarbstoffe der allgemeinen Formel I gemäß Anspruch 1 mit einem oder mehreren Farbstoffen, wie sie üblicherweise zum Färben von Polyesterfasern oder Polyestertextilmateralien für Automobilbezugsstoffe verwendet werden.

5. Mischung gemäß Anspruch 4, dadurch gekennzeichnet, daß die Farbstoffe zum Färben von Automobilbezugsstoffen Azo-, Disazo-, Anthrachinon-, Nitro-, Naphthalimid- oder Terephthalimid-Farbstoffe sind.

6. Verfahren zur Herstellung eines Monoazofarbstoffes der allgemeinen Formel I dadurch gekennzeichnet, daß man eine Verbindung der allgemeinen Formel II 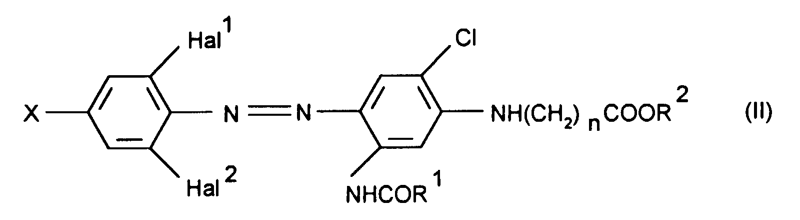 worin
Hal¹ und Hal² unabhängig voneinander Chlor oder vorzugsweise Brom bedeutet und R¹, R², X und n wie in Anspruch 1 angegeben definiert sind, einer nucleophilen Austauschreaktion unterwirft, wobei als nucleophiles Agenz das Cyanidion CN^{⊖} eingesetzt wird.

7. Verwendung der Monoazofarbstoffe der allgemeinen Formel I gemäß einem oder mehreren der Ansprüche 1, 2 und 3, beziehungsweise der Mischungen gemäß einem oder mehreren der Ansprüche 4 und 5 zum Färben und Bedrucken von hydrophoben synthetischen Materialien.

8. Verwendung gemäß Anspruch 7, dadurch gekennzeichnet, daß Polyesterfasern oder Polyestertextilmaterialien für Automobilbezugsstoffe gefärbt oder bedruckt werden.

## Claims

1. Monoazo dye of the general formula I 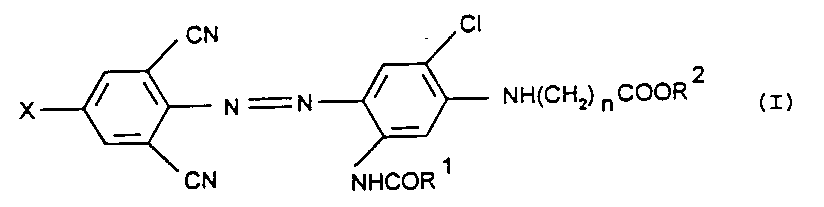 in which
X is methyl, chlorine or bromine
R¹ is ethyl, n-propyl, i-propyl, n-butyl or i-butyl
R² is methyl, ethyl, n-propyl, i-propyl, n-butyl or i-butyl and
n is 2 or 3.

2. Monoazo dye according to Claim 1, characterised in that it has the formula Ia 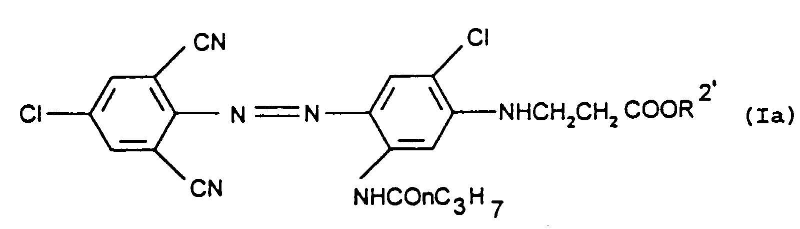 in which R^{2'} is methyl, ethyl, n-propyl or i-propyl.

3. Monoazo dye according to Claim 1 and/or 2, characterised in that it is shaded with C.I. Solvent Orange 63 or dyes similar thereto.

4. Mixture of one or more of the monoazo dyes of the general formula I according to Claim 1 with one or more dyes of the type customarily used for the dyeing of polyester fibres or polyester textile materials for automotive cover fabrics.

5. Mixture according to Claim 4, characterised in that the dyes for the dyeing of automotive cover fabrics are azo, disazo, anthraquinone, nitro, naphthalimide or terephthalimide dyes.

6. Process for the preparation of a monoazo dye of the general formula I, characterised in that a compound of the general formula II 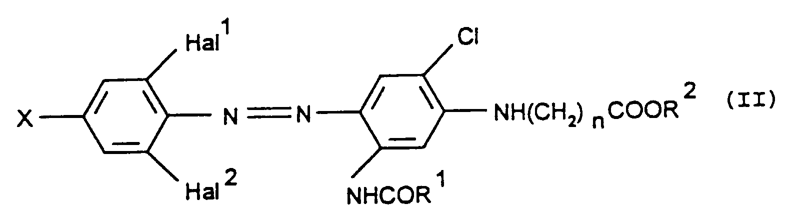 in which
Hal¹ and Hal², independently of one another, are chlorine or preferably bromine and R¹, R², X and n are as defined in Claim 1, is subjected to a nucleophilic exchange reaction in which the nucleophile used is the cyanide ion CN^{⊖}.

7. Use of the monoazo dyes of the general formula I according to one or more of Claims 1, 2 and 3, or of the mixtures according to one or more of Claims 4 and 5 for the dyeing and printing of hydrophobic synthetic materials.

8. Use according to Claim 7, characterised in that polyester fibres or polyester textile materials for automotive cover fabrics are dyed or printed.

## Revendications

1. Colorant monoazoïque de formule générale I 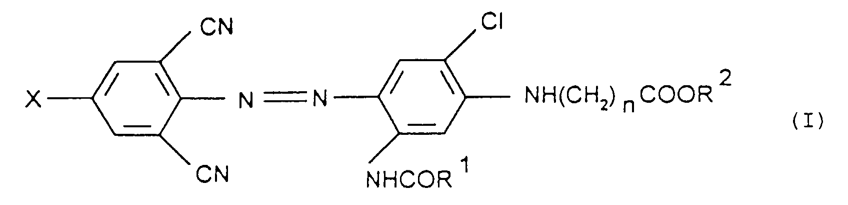 dans laquelle
X représente méthyle, le chlore ou le brome,
R¹ représente éthyle, n-propyle, i-propyle, n-butyle ou i-butyle,
R² représente méthyle, éthyle, n-propyle, i-propyle, n-butyle ou i-butyle, et
n vaut 2 ou 3.

2. Colorant monoazoïque selon la revendication 1, caractérisé en ce qu'il répond à la formule générale la 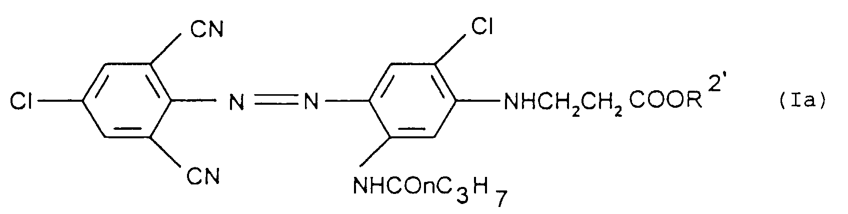 dans laquelle R^{2'} représente méthyle, éthyle, n-propyle ou i-propyle.

3. Colorant monoazoïque selon la revendication 1 et/ou 2, caractérisé en ce qu'il est nuancé par C.I. Solvent Orange 63 ou un colorant analogue à celui-ci.

4. Mélange d'un ou de plusieurs colorants monoazoïques de formule générale I selon la revendication 1, avec un ou plusieurs colorants utilisés généralement pour la teinture de fibres polyesters ou de matières textiles polyesters utilisées pour des tissus de revêtements d'automobile.

5. Mélange selon la revendication 4, caractérisé en ce que les colorants utilisés pour la teinture des tissus des revêtements d'automobile sont des colorants azoïques, disazoïques, d'anthraquinone, nitro, de naphtalimide ou de téréphtalimide.

6. Procédé pour la préparation d'un colorant monoazoïque de formule générale I caractérisé en ce que l'on fait réagir un composé de formule générale II 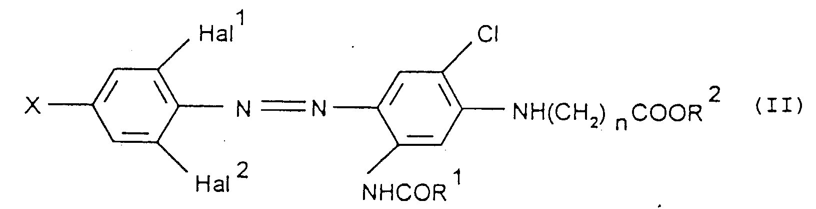 dans laquelle
Hal¹ et Hal², indépendamment l'un de l'autre, représentent le chlore ou de préférence le brome, et R¹, R², X et n ont les significations données dans la revendication 1, par une réaction d'échange nucléophile, en utilisant comme agent nucléophile l'ion cyanure CN^{⊖}.

7. Utilisation des colorants monoazoïques de formule générale I selon une ou plusieurs des revendications 1, 2 et 3, respectivement des mélanges de colorants selon une ou plusieurs des revendications 4 et 5 pour la teinture et pour l'impression de matières synthétiques hydrophobes.

8. Utilisation selon la revendication 7, caractérisée en ce que l'on teint ou imprime des fibres polyesters ou des matières textiles polyesters pour utilisation comme tissus de revêtements d'automobile.
